(19) Europäisches Patentamt

European Patent Office

Office européen des brevets

(11) Numéro de publication : **0 467 772 A1**

(12) **DEMANDE DE BREVET EUROPEEN**

(21) Numéro de dépôt : **91401976.5**

(22) Date de dépôt : **16.07.91**

(51) Int. Cl.⁵ : **F16H 63/30, F16H 57/10**

(30) Priorité : **17.07.90 FR 9009102**

(43) Date de publication de la demande :
**22.01.92 Bulletin 92/04**

(84) Etats contractants désignés :
**DE GB**

(71) Demandeur : **REGIE NATIONALE DES USINES
RENAULT S.A.
34, Quai du Point du Jour
F-92109 Boulogne Billancourt (FR)**

(72) Inventeur : **Le Trouher, Guy
18, rue Danièle Casanova
F-94170 Le Perreux-S/-Marne (FR)**
Inventeur : **Buannec, Michel
65, rue du Tir
F-92000 Nanterre (FR)**

(54) **Vérin double intégré.**

(57)    Vérin double intégré, caractérisé en ce que le piston de chacun des deux vérins (10) et (30) composant ledit vérin double a son piston (4,5) qui remplit la fonction d'appui de l'élément élastique lors du fonctionnement de l'autre vérin, ledit élément élastique étant unique et disposé dans une chambre (2) délimitée par les deux pistons (4) et (5).

FIG.1

La présente invention se rapporte à un vérin double intégré qui associe deux fonctions au sein d'un même ensemble pour la commande de deux récepteurs différents, tels que ceux utilisés dans une boîte de vitesses automatique d'un véhicule automobile de tourisme.

Dans les boîtes de vitesses automatiques, il faut commander différents organes récepteurs tels que par exemple un frein à bande et un embrayage à disques multiples. Pour ce faire, on dispose d'organes séparés qui nécessitent un encombrement important; de plus ces organes étant séparés, il doit y avoir des canalisations de liaison avec les problèmes d'étanchéité et de perte de charge que cela entraîne.

Le but de la présente invention est de proposer un vérin double intégré qui offre dans un même ensemble une double fonction, afin d'avoir un encombrement et un prix de revient minimaux.

Selon un mode de réalisation de l'invention, le vérin double intégré comprend deux vérins, avec chacun son piston. Le piston de chacun de ces vérins remplit la fonction d'appui de l'élément élastique, lors du fonctionnement de l'autre vérin. Cet élément élastique est unique, et il est disposé dans une chambre délimitée par les deux pistons en question. L'élément élastique est un ressort de compression.

Selon un mode de réalisation de l'invention, l'un des vérins agit sous l'action de la pression règnant dans sa chambre, tandis que la chambre de l'autre vérin est toujours sous la même pression, de manière à bloquer le piston de ce vérin contre une paroi solidaire du carter. La chambre qui reçoit le ressort est à une pression nulle. Le deuxième vérin est de ce fait immobilisé, et l'élément élastique a alors une fonction de rappel et s'appuie sur le piston de ce deuxième vérin.

Le deuxième vérin agit sous l'action de la pression règnant dans la chambre de l'élément élastique qui est égale à la pression règnant dans la chambre de ce vérin. La chambre du premier vérin est à pression nulle, et son piston est bloqué contre le carter. De ce fait, l'élément élastique agit de manière à fournir un déplacement du piston du deuxième vérin, ce qui augmente le volume de la chambre de l'élément élastique, afin de permettre de doser la progressivité de l'alimentation du récepteur en communication avec cette chambre. L'équilibre des forces hydrauliques de la chambre de l'élément élastique et de la chambre du deuxième vérin s'exerçant sur le piston de ce vérin, est assuré par l'égalité des diamètres internes des prolongements de ce piston dans chacune de ces chambres.

Selon un mode de réalisation de l'invention, le vérin double intégré est monté dans un même carter avec un fond pour le deuxième vérin et un couvercle pour le premier vérin.

La présente invention offre ainsi l'avantage d'offrir dans un seul ensemble monobloc, un vérin double intégré qui permet de commander deux récepteurs d'une boîte de vitesses automatique, dans un encombrement particulièrement réduit; et en évitant les canalisations de liaison entre ces deux éléments et leur problème d'étanchéité.

D'autres caractéristiques et avantages de la présente invention ressortiront de la description qui suit le mode de réalisation donné à titre d'exemple, en référence aux dessins annexés, sur lesquels :

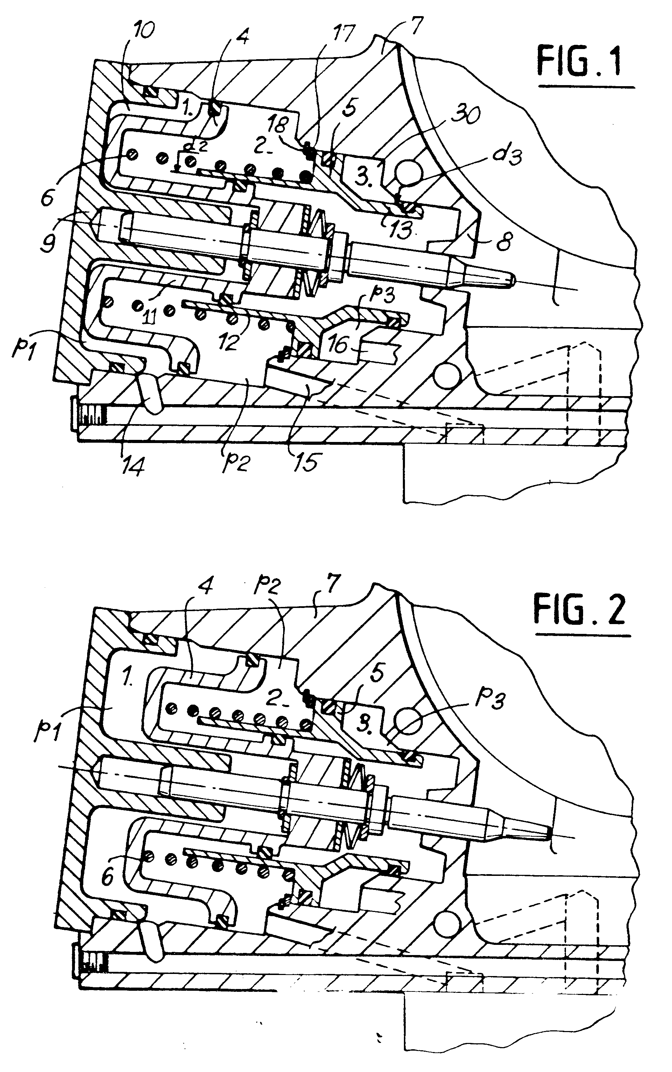

– la figure 1 est une vue en coupe axiale de l'ensemble du vérin intégré selon l'invention, dans le cas où le premier vérin est au repos, et où le deuxième vérin est sous pression avec son piston en butée;

– la figure 2 est une coupe analogue à la figure 1, dans laquelle le premier vérin est en action, tandis que le deuxième vérin a son piston qui est sous pression en butée;

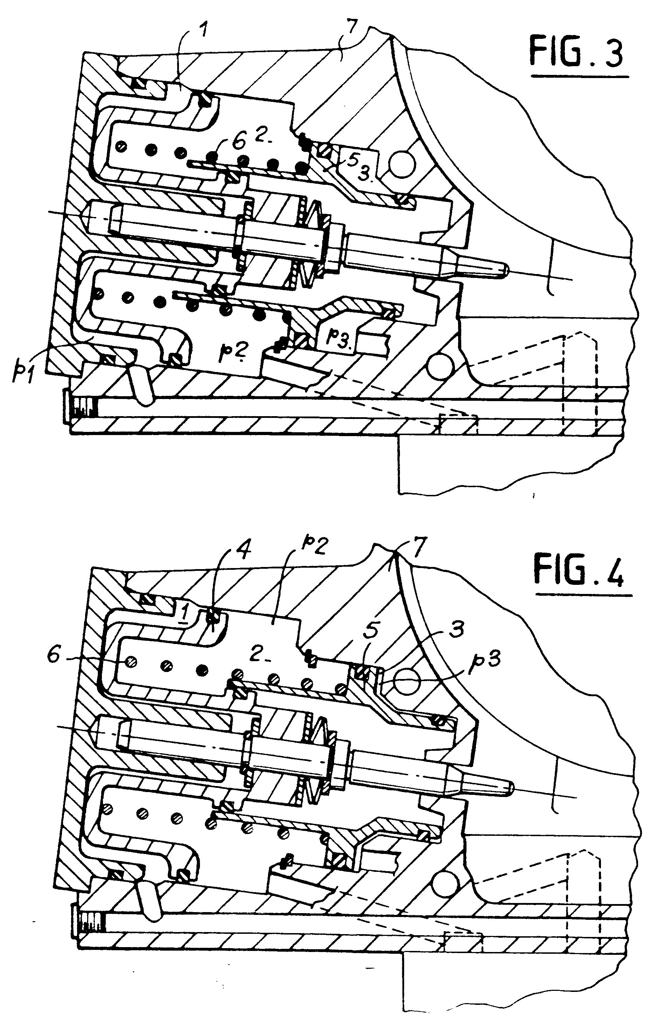

– la figure 3 est une coupe analogue à la figure 1, dans laquelle le premier vérin est au repos en butée sous l'action du ressort, tandis que le deuxième vérin est alimenté sous pression avec son piston en butée;

– la figure 4 est une coupe analogue à la figure 1, dans laquelle le premier vérin est au repos en butée sous l'action du ressort, et le deuxième vérin est en action sous l'effort du ressort.

Comme on peut le voir sur les figures, le vérin double intégré comporte deux vérins référencés 10 et 30 dans leur ensemble. Le vérin 10 a un piston 4, et le vérin 30 a un piston 5, et ils forment le vérin double intégré selon l'invention.

Chacun des pistons 4 et 5 remplit la fonction d'appui de l'élément élastique, lors du fonctionnement de l'autre vérin. L'élément élastique est unique et disposé dans une chambre 2 délimitée par les deux pistons 4 et 5.

Dans l'exemple représenté sur les figures, l'élément élastique est un ressort de compression 6, et chacun des vérins 10 et 30 commande le récepteur d'une boîte de vitesses automatique.

Le vérin double intégré est monté dans un même carter 7 avec un fond 8 pour le vérin 30, et un couvercle 9 pour le vérin 10. Le piston 5 a de part et d'autre un élément tubulaire 12 et un élément tubulaire 13. L'élément tubulaire 12 coulisse dans le fond 8 afin de constituer la chambre 3 du vérin 30. L'élément tubulaire 12 coulisse sur l'élément tubulaire 11 du piston 4 afin de constituer la chambre 2. Les pistons 4 et 5 déterminent la chambre 2, dans laquelle est disposé le ressort de compression 6. Une paroi solidaire du carter 7 est constituée par un anneau 17 qui est tenu par un circlips 18, et qui fait office de butée au piston 5 du vérin 30. Ainsi, le vérin 10 a une chambre 1 dans laquelle règne la pression $p_1$, tandis que le vérin 30 a une chambre 3 dans laquelle règne la pression $p_3$, et que dans la chambre 2 où se trouve le ressort de compression 6, règne la pression $p_2$.

Le vérin 10 agit sous l'action de la pression $p_1$ qui règne dans sa chambre 1, tandis que la chambre 3 du vérin 30 est toujours sous la même pression, de manière à bloquer le piston 5 du vérin 30 contre la paroi solidaire du carter 7, qui est constituée par l'anneau 17 et le circlips 18. La chambre 2 a une pression $p_2$ qui est égale à zéro, et le vérin 30 est de ce fait immobilisé, et le ressort de compression 6 a une fonction de rappel qui s'appuie sur le piston 5 du vérin 30.

Le vérin 30 agit sous l'action de la pression $p_2$ qui règne dans la chambre 2, et gui est égale à la pression $p_3$ qui règne dans la chambre 3. La chambre 1, quant à elle, est à la pression $p_1=0$, et le piston 4 du vérin 10 est bloqué contre le couvercle 9 du carter 7. Le ressort de compression 6 agit alors de manière à fournir un déplacement du piston 5, ce qui augmente le volume de la chambre 2, afin de permettre de doser la progressivité de l'alimentation du récepteur en communication avec elle. L'équilibre des forces hydrauliques F2 et F3 qui s'exercent dans chacune des chambres 2 et 3 sur le piston 5, est assuré par l'égalité des diamètres internes $d_2$ et $d_3$ du piston 5 dans chacune de ces chambres 2 et 3.

**Revendications**

1. Vérin double intégré, caractérisé en ce que le piston de chacun des deux vérins (10) et (30) composant ledit vérin double a son piston (4,5) qui remplit la fonction d'appui de l'élément élastique lors du fonctionnement de l'autre vérin, ledit élément élastique étant unique et disposé dans une chambre (2) délimitée par les deux pistons (4) et (5).

2. Vérin double intégré selon la revendication 1, caractérisé en ce que l'élément élastique est un ressort de compression (6).

3. Vérin double intégré selon l'une des revendications précédentes, caractérisé en ce que chacun des vérins (10) et (30) commande un récepteur d'une boîte de vitesses automatique.

4. Vérin double intégré selon la revendication 1, caractérisé en ce que le vérin (10) agit sous l'action de la pression $p_1$ règnant dans sa chambre (1), la chambre (3) du vérin (30) étant toujours sous la même pression $p_3$, de manière à bloquer le piston (5) du vérin (30) contre une paroi solidaire du carter (7); la chambre (2) étant à une pression $p_2=0$, le vérin (30) est de ce fait immobilisé et l'élément élastique (6) a une fonction de rappel et s'appuie sur le piston (5) du vérin (30).

5. Vérin double intégré selon la revendication 1, caractérisé en ce que le vérin (30) agit sois l'action de la pression $p_2$ règnant dans la chambre (2), qui est égale à la pression $p_3$ règnant dans la chambre (3); la chambre (1) étant à la pression $p_1=0$, le piston (4) du vérin (10) est bloqué contre le couvercle (9) du carter (7), et l'élément élastique (6) agit de manière à fournir un déplacement du piston (5), ce nui augmente le volume de la chambre (2), afin de permettre de doser la progessivité de l'alimentation du récepteur en communication avec elle; l'équilibre des forces hydrauliques $F_2$ et $F_3$ des chambres (2) et (3) s'exerçant sur le piston (5) étant assuré par l'égalité des diamètres internes $d_2$ et $d_3$ dudit piston dans chacune de ces chambres (2) et (3).

6. Vérin double intégré selon les revendications 4 et 5, caractérisé en ce qu'il est monté dans un même carter (7) avec un fond (8) pour le vérin (30) et le couvercle (9) pour le vérin (10); le piston (5) ayant de part et d'autre un élément tubulaire (12) et un élément tubulaire (13); l'élément tubulaire (13) coulissant dans le fond (8) afin de constituer la chambre (3) du vérin (30); et l'élément tubulaire (12) coulissant sur l'élément tubulaire (11) du piston (4) afin de constituer la chambre (2); chacune des chambres (1), (2) et (3) étant alimentée par un canal correspondant (14), (15) et (16); la paroi solidaire du carter (7) étant constitué par un anneau (17) tenu par un circlips (18).

FIG.1

FIG.2

FIG.3

FIG.4

**Office européen des brevets**    **RAPPORT DE RECHERCHE EUROPEENNE**    Numero de la demande

EP 91 40 1976

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 138 201 (NISSAN MOTOR CO., LTD) * Revendication 1; figure 2 * ----- | 1 | F 16 H 63/30 F 16 H 57/10 |
| | | | **DOMAINES TECHNIQUES RECHERCHES (Int. Cl.5)** |
| | | | F 16 H |

Le présent rapport a été établi pour toutes les revendications

| Lieu de la recherche | Date d'achèvement de la recherche | Examinateur |
|---|---|---|
| LA HAYE | 09-10-1991 | MENDE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

6